Europäisches Patentamt

European Patent Office

Office européen des brevets

(11) Publication number: **0 361 945**
**A2**

## EUROPEAN PATENT APPLICATION

(21) Application number: **89309941.6**

(22) Date of filing: **29.09.89**

(51) Int. Cl.5: **G01S 15/58**

(30) Priority: **30.09.88 JP 248796/88**

(43) Date of publication of application:
**04.04.90 Bulletin 90/14**

(84) Designated Contracting States:
**AT BE CH DE ES FR GB GR IT LI LU NL SE**

(71) Applicant: **Ohtsuki, Shigeo**
**11-7 Chioda 4-Chome**
**Sagamihara-shi Kanagawa-ken(JP)**

Applicant: **Tanaka, Motonao**
**4-16 Kunimi 4-chome**
**Sendai-shi Miyagi-ken(JP)**

(72) Inventor: **Ohtsuki, Shigeo**
**11-7 Chioda 4-Chome**
**Sagamihara-shi Kanagawa-ken(JP)**
Inventor: **Tanaka, Motonao**
**4-16 Kunimi 4-chome**
**Sendai-shi Miyagi-ken(JP)**

(74) Representative: **Gordon, Michael Vincent**
**GILL JENNINGS & EVERY 53-64 Chancery**
**Lane**
**London WC2A 1HN(GB)**

(54) **Measuring doppler velocity.**

(57) At least two phase signals are detected at two different times and stored in a memory (2, 3), a base value is estimated from the two phase signals in a base value estimating means (4), the base value is compared with a new detected signal in a compare circuit (6) and Doppler velocity data is detected due to a difference between the base value and the new detected signal latched in a latch circuit (5).

Fig. 1

## MEASURING DOPPLER VELOCITY

The present invention relates to a method and a device for measuring Doppler velocity in which a base value is estimated on the basis of previously input phase signals and a detected phase signal is compared with the base value whereby Doppler velocity data is detected.

A well recognised phenomenon, called "aliasing", wherein blood flow appears to have a different velocity or direction than it actually has, occurs when blood flow exceeds a maximum velocity decided with given ultrasonic wave carrier frequency and pulse repetition frequency. The aliasing results from the fact that Doppler frequency is larger than $1/2$ of pulse frequency. Accordingly, there is desired a new approach in which the aliasing effect does not appear in the detected signals.

Taking account of the above desire, a multiple demodulation frequency Doppler system has been proposed in US 4,534,357. In accordance with that system, a broad band signal is transmitted and the Doppler shifted return signal is detected at two different frequencies contained in the received wideband signal. When the mean frequency of each of the two signals is detected, the resulting frequency will be that which would have been produced by a system operating at the difference frequency. Thus, for reference local oscillators which operate at frequencies $f_1$ and $f_2$ respectively, the detected Doppler shifted return frequencies produced would be:

$fd_1 = 2vf_1 c$

and

$fd_2 = 2vf_2 c$

subtracting $fd_2$ from $fd_1$ gives:

$fd = fd_1 - fd_2 = 2v(f_1 - f_2)/c = 2v\Delta fo/c$

Thus, the detected Doppler frequency shift, fd, is that which would have been produced by a Doppler system transmitting and demodulating at the difference frequency $\Delta fo$ (equal to $f_1 - f_2$). Since $\Delta fo$ can be made much smaller than $f_1$ or $f_2$, fd will be proportionally smaller than $fd_1$ or $fd_2$.

In such a Doppler system, the construction for detecting the difference between two frequencies is complicated and since the differences between the two frequencies are very small, the detection of the Doppler velocity is very difficult.

In accordance with a first aspect of the present invention, a method for measuring Doppler velocity is characterised by estimating a base value from two phase signals detected at two different times and obtaining Doppler velocity data due to a difference between the base value and a new detected phase signal.

In accordance with a second aspect of the present invention, a device for measuring Doppler velocity is characterised by a phase signal outputting means for successively outputting detected phase signals by successively emitting and receiving ultrasonic wave, a memory for successively memorising the phase signals from the phase signal outputting means, a base value estimating means for estimating a base value from at least two phase signals read out of the memory, and a comparing means for comparing a new phase signal output from the phase signal outputting means with the base value from the base value estimating means after the base value has been estimated in the base value estimating means, whereby Doppler velocity data is detected by the difference between the new phase signal and the base value.

Three embodiments of the present invention will now be described, by way of example only, with reference to the accompanying drawings in which:-

Fig. 1 is a block diagram for explaining the measurement of Doppler velocity in one embodiment of the present invention;

Fig. 2 is a line diagram for indicating the operation of the embodiment of Fig. 1;

Fig. 3 is a block diagram for explaining the measurement of Doppler velocity in a second embodiment of the present invention; and

Fig. 4 is a block diagram for explaining the measurement of Doppler velocity in a third embodiment of the present invention.

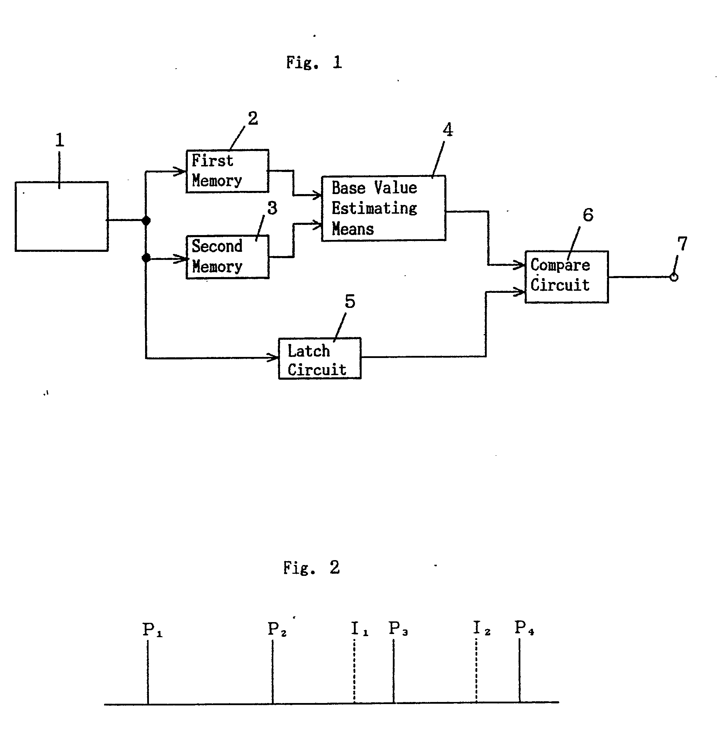

Referring to Fig. 1, a phase signal outputting means 1 successively outputs phase signals. The phase signals are obtained by emitting ultrasonic wave signals in fluid. That is, when pulses having a frequency are output from a transmitter, ultrasonic wave signals are emitted from a piezoelectric vibrator to the fluid and the echo signals of the ultrasonic wave are detected with the piezoelectric vibrator. When these detected echo signals are processed with the transmitted signals, the processed signals have frequencies changed by the velocity of the fluid and are called Doppler signals.

The first phase signal output from the phase signal outputting means is memorised in a first memory 2 and the next phase signal is memorised in a second memory 3. A base value signal is estimated in the base value estimating means 4 on the basis of the phase signals read out of the first memory 2 and the second memory 3 and is output from the base value estimating means 4. Then, the first phase signal is eliminated from the first memory 2 and the third phase signal is memorised in the first memory 2 and is latched in a latch circuit 5. The third phase signal latched in the latch circuit 5 is compared with the base value signal from the base value estimating means 4 in the compare circuit 6. The difference signal between the third phase signal and the base value signal is output from an output terminal 7 as Doppler velocity data. The next base value signal is estimated in the base value estimating means 4 on the basis of the second phase signal and the third phase signal. The fourth phase signal is memorised in the second memory 3 and is latched in the latch circuit 5, the next base value signal from the base value estimating means 4 is compared with the fourth phase signal from the latch circuit 5 and the difference signal between the next base value signal and the fourth phase signal is output from the output terminal 7 as Doppler velocity data.

Explaining the above operation in Fig. 2, the first phase signal $P_1$ is memorised in the first memory 2, the second phase signal $P_2$ is memorised in the second memory 3 and the base value $I_1$ is estimated on the basis of the first and second phase signals. Then, the first phase signal $P_1$ is eliminated from the first memory 2, the third phase signal $P_3$ is memorised in the first memory 2 and is latched in the latch circuit 5, and the base value $I_1$ and the third phase signal $P_3$ are compared with each other in the compare circuit 6. Also, the next base value $I_2$ is estimated in the base value estimating means 4 on the basis of the second phase signal $P_2$ and the third phase signal $P_3$.

As stated above, the base value is estimated on the basis of the two phase signals respectively memorised in the memories 2 and 3 and the Doppler velocity signal is detected by comparing the next phase signal with the base value so that a large change of the Doppler velocity data is detectable.

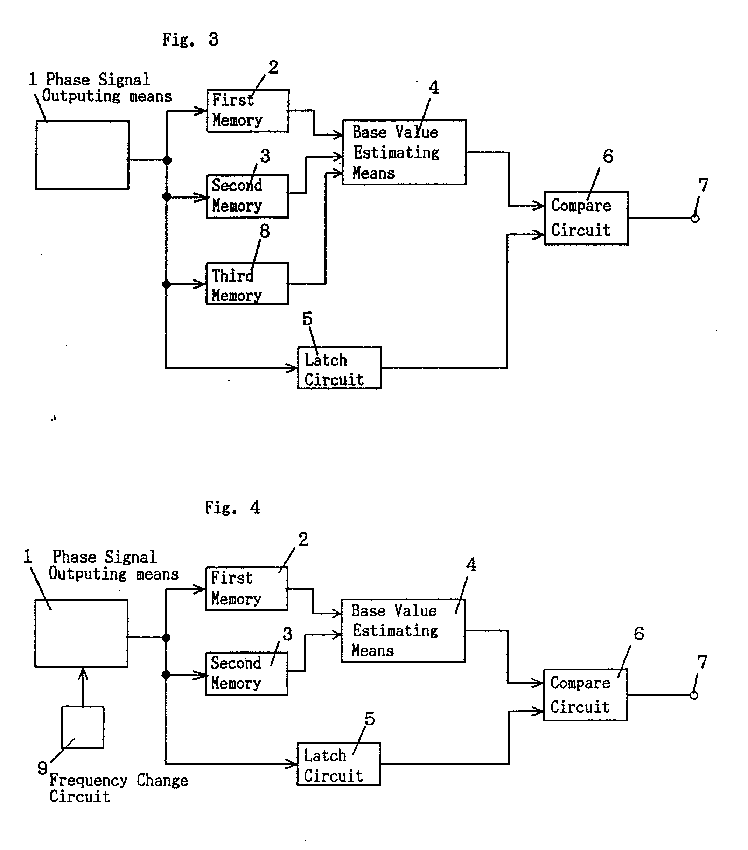

Referring to Fig. 3, in a second embodiment of the present invention, there is again a phase signal outputting means 1, a first memory 2, a second memory 3, a base value estimating means 4, a latch circuit 5 and a compare circuit 6. These components are the same as in the embodiment of Fig. 1. In the second embodiment, a third memory 8 is connected between the phase signal outputting means 1 and the base value estimating means 4. Thus, a base value is estimated on the basis of three phase signals memorised in the first, second and third memories 2, 3 and 8 and is compared with the next phase signal, whereby Doppler velocity data is detected.

Referring to Fig. 4, in a third embodiment of the present invention, there is again a phase signal outputting means 1, a first memory 2, a second memory 3, a base value estimating means 4, a latch circuit 5 and a compare circuit 6. These components are the same as in the embodiments of Fig. 1 and Fig. 2. In the third embodiment, a frequency change circuit 9 is connected to the phase signal outputting means 1.

In the third embodiment, the phase signals from the phase signal outputting means 1 are memorised in the first and second memories 2 and 3, and the base value is estimated on the basis of these phase signals. After the base value is estimated, the Doppler frequency of the ultrasonic wave signal transmitted and received in the phase signal outputting means is made large by the frequency change circuit 9, the phase signal of the large Doppler frequency is latched in the latch circuit 5 and this phase signal is compared with the base value in the compare circuit 6. Accordingly, the difference signal between the signals becomes large. Thereby, in low blood velocity, the Doppler velocity data can be detected as a large phase signal.

When the Doppler frequency of the phase signal output from the phase signal outputting means 1 is made small, for example, the distance between the phase signal $P_2$ and the base value signal $I_1$ is set by the integer times (one time in general) of the distance between the phase signals $P_1$ and $P_2$, the precision of the estimated signals is improved.

In the present invention, the difference between the estimated base value and the input phase signal is clearly distinguished and large velocity data is reliably obtained, even though the present invention is simple in construction and is operated in real time.

## Claims

1. A method for measuring Doppler velocity is characterised by estimating a base value from two phase signals detected at two different times and obtaining Doppler velocity data due to a difference between the base value and a new detected phase signal.

2. A method according to claim 1, characterised in that a Doppler frequency of the new detected phase signal is different from the Doppler frequency of the phase signals for estimating the base value.

3. A device for measuring Doppler velocity is characterised by a phase signal outputting means (1) for successively outputting detected phase signals by successively emitting and receiving ultrasonic wave, a memory (2, 3) for successively memorising the phase signals from the phase signal outputting means, a base value estimating means (4) for estimating a base value from at least two phase signals read out of the memory, and a comparing means (6) for comparing a new phase signal output from the phase signal outputting means (1) with the base value from the base value estimating means (4) after the base value has been estimated in the base value estimating means, whereby Doppler velocity data is detected by the difference between the new phase signal and the base value.

4. A device according to claim 3, characterised in that a frequency change circuit (9) for changing the Doppler frequency is connected to the phase signal outputting means (1).

Fig. 1

Fig. 2

Fig. 3

1 Phase Signal Outputing means

First Memory 2

Second Memory 3

Third Memory 8

Base Value Estimating Means 4

Latch Circuit 5

Compare Circuit 6

7

Fig. 4

1 Phase Signal Outputing means

First Memory 2

Second Memory 3

Base Value Estimating Means 4

Latch Circuit 5

Compare Circuit 6

7

9 Frequency Change Circuit